Europäisches Patentamt

European Patent Office

Office européen des brevets

(11) Veröffentlichungsnummer: **0 486 984 A1**

## (12) EUROPÄISCHE PATENTANMELDUNG

(21) Anmeldenummer: **91119621.0**

(22) Anmeldetag: **18.11.91**

(51) Int. Cl.5: **D01H 1/241**, F16H 7/12, F16F 9/04

(30) Priorität: **23.11.90 DE 4037289**

(43) Veröffentlichungstag der Anmeldung:
**27.05.92 Patentblatt 92/22**

(84) Benannte Vertragsstaaten:
**CH DE FR GB IT LI**

(71) Anmelder: **MASCHINENFABRIK RIETER AG**

**CH-8406 Winterthur(CH)**

(72) Erfinder: **Mondini, Giancarlo, Dr.**
**Theodor Reuter Weg 6**
**CH-8400 Winterthur(CH)**

(54) **Vorrichtung zum Spannen eines Treibriemens.**

(57) In einer Ringspinnmaschine wird der Treibriemen für die Spindeln mittels einer Spannrolle (18,19) vorgespannt, die auf einem Winkelhebel (22) gelagert ist. Ein Schenkel (24) des Winkelhebels (22) liegt auf einem elastischen Element bzw. einem mit einem Druckmedium gefüllten Schlauch (25) auf und wird dadurch vorgespannt. Die Beaufschlagung des elastischen Elements mit dem Druckmedium kann zentral gesteuert werden, bsw. beim Einschalten oder Abstellen der Spinnmaschine oder für Wartungsarbeiten. Dadurch ergibt sich eine wesentliche Bedienungserleichterung und der Vorteil der Entspannungsmöglichkeit des Treibriemens, wenn er keine Leistung zu übertragen hat.

Fig.4

EP 0 486 984 A1

Die Erfindung betrifft eine Vorrichtung zum Spannen eines Treibriemens, insbesondere eine Riemens zum Antrieben von Spindeln in einer Ringspinnmaschine, wobei der Riemen vor und/oder nach einer Antriebsrolle od. dgl. über zumindest eine Spannrolle geführt ist.

Insbesondere bei Ringspinn-Maschinen werden auf Spindeln Hülsen aufgesetzt und über die Spindeln in Drehbewegung versetzt. Hierdurch entsteht beim Aufwickeln des Fadens auf dieser Hülse der gewünschte Kops.

Das Drehen der Spindeln geschieht bevorzugt über einen Riemen, der über eine Riemenantriebsrolle geführt ist. Dabei ist der Riemen meist als Endlosband ausgebildet und verläuft nach der Riemenantriebsrolle über ein oder zwei Spannrollen und umschlingt dann meist zwei benachbarte Spindeln auf jeder Seite der Ringspinn-Maschine.

Für diesen Riemenantrieb ist es notwendig, dass der Riemen immer unter Spannung gehalten bleibt, damit ein gleichmässiger Spindelantrieb gewährleistet ist. Dieses Spannen geschieht über die Spannrollen, welche beweglich gelagert sind. Durch ein Bewegen der Spannrollen kann der Riemen mehr oder weniger gespannt werden. Beispielsweise nach der CH-PS 603 906 geschieht ein Bewegen der Spannrollen über entsprechende Federpakete, welche sich einerseits ortsfest abstützen und andererseits die Spannrollen in die gewünschte Richtung gegen einen Riemenzug drücken. In derselben Schrift ist auch eine Kolben-Zylinder-Einheit gezeigt, welche die Bandspannung auf hydraulischem oder pneumatischem Wege bewirkt. Diese Anordnungen sind zum einen recht aufwenig, zum anderen bedürfen sie einer laufenden Wartung und Kontrolle. Durch das Federpaket ist keine Veränderung der Bandspannung während des Betriebes möglich.

Der Erfinder hat sich zum Ziel gesetzt, eine Vorrichtung der oben genannten Art zu entwickeln, welche konstruktiv sehr einfach aufgebaut ist und kaum einer Wartung bedarf. Sie soll völlig selbsttätig arbeiten, jedoch, falls gewünscht, auch eine Änderung der Spannung ermöglichen.

Zur Lösung dieser Aufgabe führt, dass die Spannrolle mit einem Schenkel eines Winkelhebels verbunden ist, der um eine Drehachse dreht, und dessen anderer Schenkel einem mit einem Druckmedium gefüllten Schlauch, einem Kissen od. dgl. elastischen Element aufliegt.

Dabei macht sich vor allem die Erfindung die Rückstellbewegung des elastischen Elementes zunutze. Beispielsweise ist diese Rückstellbestrebung bereits bei einem Gummikissen gegeben, wobei dann allerdings die Rückstellkraft nicht einstellbar ist. Denkbar sind aber auch andere elastische Kissen od. dgl., welche einem Druck entgegenwirken.

Im vorliegenden Ausführungsbeispiel soll das elastische Element bevorzugt ein mit Luft füllbarer Schlauch, ein Kissen od. dgl. sein. Wird beispielsweise dieser Schlauch in einem ansonsten geschlossenen Rohr angeordnet, so kann durch ein entsprechendes Füllen mit Pressluft oder auch ein Verändern der Befüllung mit Pressluft der Druck eingestellt werden, mit dem der Schlauch einem Druck des Schenkels des Winkelhebels entgegenwirkt.

Da die Bandspannung sich in geringem Umfang beim Betrieb einer Ringspinn-Maschine laufend ändern kann, wird es nicht zu vermeiden sein, dass sich die Winkelhebel auch laufend bewegen. Hierbei kann es zu einem unerwünschten Reibungsverschleiss bei Reibung des Schenkels auf dem Schlauch kommen. Deshalb wird bevorzugt der Schlauch zumindest im Bereich der Auflagefläche des Schenkels mit einer verschleissfesten Schutzfolie abzudecken sein.

Die Drehachse für den Winkelhebel soll ortsfest liegen. Hierzu bietet sich an, dass als ortsfeste Anlenkungsstelle das Maschinengestell verwendet wird. Bei Verwendung eines Rohres, welches die Maschine in Längsrichtung durchzieht, wird aber der Einfachheit halber eine Befestigungslasche auf dieses Rohr aufgesetzt und beispielsweise mit dem Rohr verschweisst.

Zur Einstellung der Grundriemenspannung kann es auch günstig sein, wenn die Spannrollen in ihrer Lage veränderbar sind. Deshalb wird bevorzugt der Winkelhebel nicht einstückig ausgebildet, sondern der eine Schenkel, welcher die Spannrollen hält, ist in seiner Länge veränderbar. Hierzu genügt es, wenn dieser Schenkel in den anderen Schenkel des Winkelhebels eingesteckt und dort verschiebbar gehaltert ist.

Die Lagerung der Spannrollen soll so erfolgen, dass sie in der Laufrichtung des Riemens liegen. In der Regel wird deshalb die Lage auch mit der Ebene der Antriebsrollen übereinstimmen. Für die Lagerung der Spannrollen an dem Schenkel hat es sich in der Praxis als günstiger erwiesen, wenn sich das Lager für einen entsprechenden Wellenstummel im Schenkel und nicht in der Spannrolle befindet. Diese drehenden Wellenstummel benötigen weniger Energie, da der Innenring des Kugellagers dreht und nicht Aussenring.

Insgesamt ist die Vorrichtung sehr einfach aufgebaut und bedarf deshalb keinerlei Wartung. Sie wirkt selbsttätig und passt sich sehr günstig und ohne Energieaufwand einer gewünschten Riemenspannung an. Es ist auch eine Regelung der Riemenspannung auf minimale Spannung hin möglich. Ferner kann eine Druckentlastung bei Maschinenstop stattfinden. Das ganze System arbeitet schwingungsfrei und gedämpft. Es verursacht keinerlei Lärm.

Die Erfindung wird nachfolgend in einem bevorzugten Ausführungsbeispiel anhand der Zeichnung näher beschrieben; diese zeigt in

Figur 1 einen teilweise dargestellten Querschnitt durch eine Ringspinn-Maschine;

Figur 2 eine vergrösserte Seitenansicht von Teilen eines Bandantriebes;

Figur 3 eine Draufsicht auf Teile des Bandantriebes gemäss Figur 2;

Figur 4 eine teilweise geschnittene Seitenansicht einer Spannrolle und deren Lagerung.

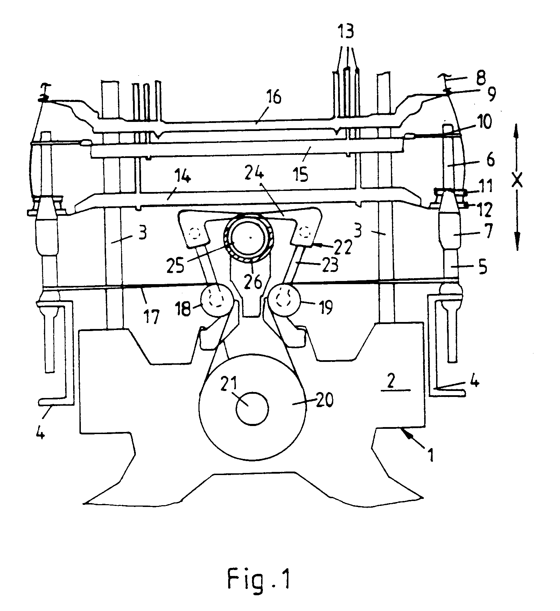

In Figur 1 sind von einer Ringspinn-Maschine Teile eines Maschinengestells 1 und zwar Teile eines Unterteils 2 und eines Oberteils 3 gezeigt. Die Darstellungsweise ist schematisiert.

Mit dem Unterteil 2 des Maschinengestells 1 ist jeweils beidseits des Unterteils 2 eine Spindelbank 4 verbunden, wobei sich diese Spindelbank 4 in der Höhe verstellen lässt. Auf der Spindelbank 4 sitzen Spindeln 5 auf, denen wiederum Hülsen 6 aufgesteckt sind, auf denen ein Kops 7 ausgebildet wird. Hierzu kommt von einem nicht näher gezeigten Streckwerk ein Faden 8, der zuerst einen Fadenführer ("Sauschwänzli") 9 durchfährt. Danach durchsetzt er einen Ballonring 10 und wird zu einer zentrierbaren Ringbefestigung 11 geführt, welche Teil eines Ringrahmens 12 ist. Dieser Ringrahmen 12 besitzt eine Öse od. dgl., durch die der Faden 8 läuft und von dort aus auf die Hülse 6 als Kops 7 aufgewickelt wird.

Sowohl Fadenführer 9, Ballonring 10 wie auch Ringrahmen 12 bewegen sich entlang der Hülse 6 in Richtung x auf und nieder, so dass eine gewünschte, zum Teil sich kreuzende Aufwicklung des Fadens auf der Hülse 6 entsteht. Diese Bewegung in Richtung x wird durch nicht näher gezeigte Antriebe gesteuert, welche über Zugmittel 13 entsprechende Bänke 14, 15 und 16 für den Ringrahmen 12, den Ballonring 10 und den Fadenführer 9 anheben bzw. absenken.

Zum Aufwickeln des Fadens 8 werden die Hülsen 6 über die Spindeln 5 in Drehbewegung versetzt. Diese Drehbewegung bewirkt ein Riemen 17, der beispielsweise als Endlosriemen ausgebildet ist und jeweils zwei nebeneinander liegende Spindeln 5 auf beiden Seiten des Maschinengestells 1 umschlingt. Zwischen zumindest zwei sich gegenüberliegenden Spindeln 5 wird dieser Riemen 17 über zwei Spannrollen 18 und 19 und dazwischen über eine Bandantriebsrolle 20 geführt. Diese Bandantriebsrolle 20 ist einer Welle 21 aufgesetzt, welche mit einem nicht näher gezeigten, beispielsweise elektromotorischen Antrieb in Verbindung steht.

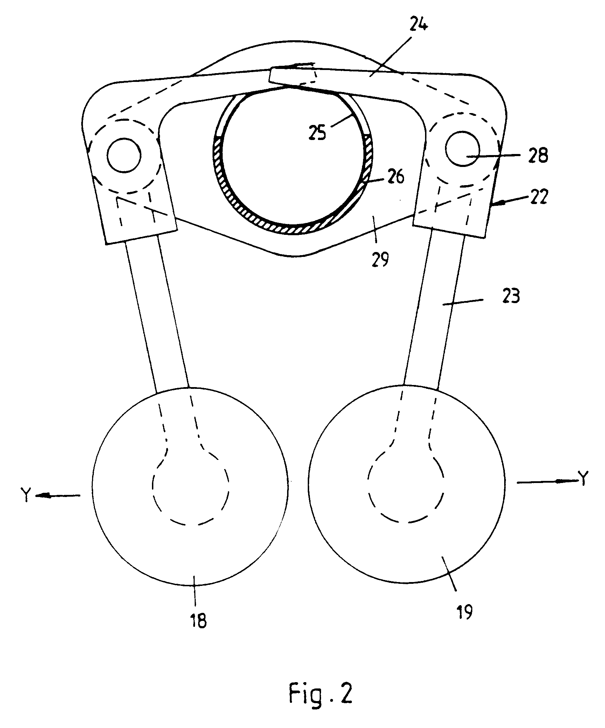

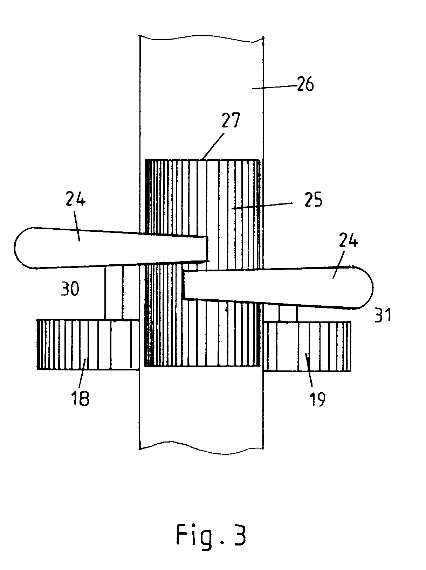

Um den Riemen 17 immer unter Spannung zu halten, sind die Spannrollen 18 und 19 bewegbar gelagert. Diese Lagerung geschieht an jeweils einem Winkelhebel 22, dessen einer Schenkel 23 die Spannrolle 18 bzw. 19 trägt, während der andere Schenkel 24 einem Schlauch 25 in einem Rohr 26 aufliegt. Diese Anordnung ist in den Figuren 2 und 3 deutlicher gezeigt.

Bei dem Rohr 26 handelt es sich um ein bevorzugt durch das gesamte Maschinengestell 1 in dessen Längsachse verlaufendes geschlossenes Metall- oder Kunststoffrohr. Lediglich im Bereich der Winkelhebelauflage ist dieses Rohr, wie in Figur 3 gezeigt, ausgeschnitten, so dass in diesem Ausschnitt 27 der Schlauch 25 freiliegt. Dieser Schlauch 25 besteht bevorzugt aus einem Kunststoffmantel und kann noch mit einer Schutzfolie gegen Verschleiss bei Reibung der Schenkel 24 überdeckt sein. Ferner ist der Schlauch 25 mit Pressluft gefüllt, so dass er sich einem Druck der Schenkel 24 der Winkelhebel 22 widersetzt. Der die Spannrollen 18 und 19 umschlingende Riemen 17 versucht, die Spannrollen 18 und 19 in Richtung y zu bewegen. Dabei dreht der Winkelhebel 22 um eine Drehachse 28, welche gehäusefest ist. Diese Drehung um die Drehachse 28 bewirkt aber, dass der Schenkel 24 auf den Schlauch 25 drückt, wobei sich der mit Pressluft gefüllte Schlauch 25 diesem Druck widersetzt. Hierdurch wird der Riemen 17 dauernd unter Spannung gehalten, ohne dass irgendwelche mechanischen Hilfsmittel notwendig sind.

Bevorzugt ist die Drehachse 28 gehäusefest. Hierzu ist beispielsweise dem Rohr 26 eine Befestigungslasche 29 aufgesetzt und mit dem Rohr 26 fest verbunden.

Des weiteren soll auch die Möglichkeit bestehen, den Schenkel 23 des Winkelhebels 22 zu verlängern oder zu verkürzen und hierdurch eine bessere Einstellung der Spannrollen 18 und 19 auf den Riemen 17 zu ermöglichen. Deshalb ist der Winkelhebel 22 in einem weiteren Ausführungsbeispiel nicht einstückig ausgebildet, sondern der Schenkel 23 steckt verschiebbar in dem Schenkel 24, wobei beispielsweise die Festlegung des Schenkels 23 in dem Schenkel 24 durch eine Madenschraube od. dgl. erfolgen kann.

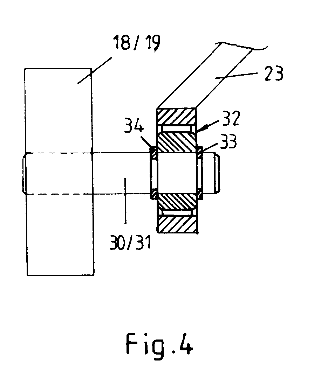

Bevorzugt befinden sich Spannrolle 18 und 19 auf gleicher Höhe miteinander und mit der Riemenantriebsrolle 20. Hierdurch wird ein Abrutschen des Riemens 17 von einer der Rollen vermieden. In einem denkbaren Ausführungsbeispiel ist es möglich, dass die Spannrollen 18 bzw. 19 an dem Schenkel 23 in Gabeln od. dgl. gehalten sind, wobei dann ein Schenkel 23 gekröpft ausgebildet werden sollte, damit sich kein Versatz der Spannrollen 18 und 19 ergibt. In dem in Figur 3 gezeigten Ausführungsbeispiel sind dagegen die Spannrollen 18 bzw. 19 jeweils über einen Wellenstummel 30 bzw. 31 mit dem Schenkel 23 verbunden. Dabei ist der Wellenstummel 30 länger ausgebildet als der Wellenstummel 31, so dass sich auch hier wieder eine Übereinstimmung der Lage der Spannrollen 18 und 19 ergibt. Selbstverständlich können die Wellenstummel 30 und 31 auch gleich lang sein, wobei dann ein Schenkel 23 gekröpft ausgebildet ist, wie dies in Figur 4 angedeutet wird.

Es ist vorteilhaft, wenn ein Wälzlager 32 für den Wellenstummel 30 bzw. 31 nicht in der Spannrolle 18 und 19, sondern in dem Schenkel 23 angeordnet ist. Dann nämlich dreht der Wellenstummel 30 bzw. 31 in dem Walzlager 32 und nicht die Spannrolle 18 bzw. 19 um den Wellenstummel 30 bzw. 31. Der Energieverbrauch beim Drehen des Innenringes eines Wälzlagers ist geringer als beim Drehen des Aussenringes. Die Lebensdauer des Wälzlagers wird so erhöht und die Schmierintervalle können grösser gewählt werden.

Klemmringe 33 bzw. 34 deuten die Halterung des Wellenstummels 30 bzw. 31 an dem Schenkel 23 an.

**Patentansprüche**

1. Vorrichtung zum Spannen eines Treibriemens, insbesondere eines Riemens zum Antreiben von Spindeln in einer Ringspinnmaschine, wobei der Riemen vor und/oder nach einer Antriebsrolle od. dgl. über zumindest eine Spannrolle geführt ist,

   dadurch gekennzeichnet,

   dass die Spannrolle (18,19) mit einem Schenkel (23) eines Winkelhebels (22) verbunden ist, der um eine Drehachse (28) dreht, und dessen anderer Schenkel (24) einem mit einem Druckmedium gefüllten Schlauch (25), Kissen od. dgl. elastischen Element aufliegt

2. Vorrichtung nach Anspruch 1, dadurch gekennzeichnet, dass der Schlauch (25) in einem Rohr (26) angeordnet ist, welches im Bereich der Auflage des Schenkels (24) einen Ausschnitt (27) aufweist.

3. Vorrichtung nach Anspruch 1 oder 2, dadurch gekennzeichnet, dass der Schlauch (25) zumindest im Bereich der Auflage des Schenkels (24) mit einer verschleissfesten Schutzfolie überdeckt ist.

4. Vorrichtung nach einem der Ansprüche 1 bis 3, dadurch gekennzeichnet, dass die Drehachse (28) an einer Befestigungslasche (29) angeordnet ist, welche ggfs. mit dem Rohr (26) fest verbunden ist.

5. Vorrichtung nach wenigstens einem der Ansprüche 1 bis 4, dadurch gekennzeichnet, dass der Schenkel (23) gegenüber dem Schenkel (24) in seiner Länge veränderbar ist.

6. Vorrichtung nach wenigstens einem der Ansprüche 1 bis 5, dadurch gekennzeichnet, dass die Spannrolle (18,19) mit einem Wellenstummel (30,31) in einem Lager (32) in dem Schenkel (23) sitzt.

Fig.1

Fig. 2

Fig. 3

18/19

23

34

32

33

30/31

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-1 575 619 (SIEMENS-ELEKTROGERÄTE GMBH) <br> * Seite 2, Zeile 22 - Seite 3, Spalte 10; Abbildung 1 * <br> --- | 1,6 | D01H1/241 <br> F16H7/12 <br> F16F9/04 |
| A | GB-A-2 088 996 (GORDON LLOYD PUMPHREY) <br> * Seite 1, Zeile 70 - Zeile 83; Abbildungen 1,2 * <br> --- | 2 | |
| A | GB-A-1 061 281 (T.M.M. LIMITED) <br> * Seite 1, Zeile 18 - Zeile 49; Abbildungen 1-3 * <br> --- | 1 | |
| A,D | FR-A-2 324 199 (MASCHINENFABRIK RIETER AG) <br> * Ansprüche 1-11; Abbildungen 1-6 * <br> --- | 1 | |
| A | BE-A-356 296 (CARL HAMEL AG) <br> * Ansprüche 1-3; Abbildungen 1,2 * <br> --- | 1 | |
| A | PATENT ABSTRACTS OF JAPAN <br> vol. 13, no. 367 (C-626)(3715) 15. August 1989 <br> & JP-A-1 124 633 ( MURATA MACH LTD ) 17. Mai 1989 <br> * das ganze Dokument * <br> --- | 1 | **RECHERCHIERTE SACHGEBIETE (Int. Cl.5 )** <br><br> D01H <br> F16H <br> F16F <br> D06F |
| A | DE-A-2 758 335 (W. SCHLAFHORST & CO) <br><br> ----- | | |

Der vorliegende Recherchenbericht wurde für alle Patentansprüche erstellt

| Recherchenort | Abschlußdatum der Recherche | Prüfer |
|---|---|---|
| DEN HAAG | 05 MAERZ 1992 | TAMME H.-M.N. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

......................................................................
& : Mitglied der gleichen Patentfamilie, übereinstimmendes Dokument

EPO FORM 1503 03.82 (P0403)